# EUROPÄISCHE PATENTSCHRIFT

(11) **EP 3 234 749 B1**
(45) Veröffentlichungstag und Bekanntmachung des Hinweises auf die Patenterteilung: **18.09.2019**
(21) Anmeldenummer: 15797281.1
(22) Anmeldetag: 12.11.2015
(51) Int. Cl.: G06F 3/0481, G06F 3/0484

(54) **ANWENDERSCHNITTSTELLE UND VERFAHREN ZUR INDIVIDUALISIERUNG EINES ANZEIGEINHALTES IN EINEM FORTBEWEGUNGSMITTEL**
USER INTERFACE AND METHOD FOR CUSTOMISING A DASH DISPLAY IN A VEHICLE
INTERFACE UTILISATEUR ET PROCÉDÉ POUR PERSONNALISATION D'UN TABLEAU DE BORD DANS UN VÉHICULE

(30) Priorität: 17.12.2014 DE 102014226207
(43) Veröffentlichungstag der Anmeldung: 25.10.2017
(73) Patentinhaber: Volkswagen Aktiengesellschaft, 38440 Wolfsburg (DE)
(72) Erfinder: WILD, Holger, 10179 Berlin (DE); KÖTTER, Nils, 38118 Braunschweig (DE)
(86) Internationale Anmeldenummer: PCT/EP2015/076368
(87) Internationale Veröffentlichungsnummer: WO 2016/096265

(56) Entgegenhaltungen:
- US-A1- 2011 175 754
- US-A1- 2011 209 079
- US-A1- 2013 293 452

## Beschreibung

### Stand der Technik

Die vorliegende Erfindung betrifft eine Anwenderschnittstelle für ein Fortbewegungsmittel sowie ein Verfahren zur Individualisierung eines Anzeigeinhaltes auf einem Bildschirm einer Anwenderschnittstelle für ein Fortbewegungsmittel. Insbesondere betrifft die vorliegende Erfindung eine Möglichkeit zur anwenderspezifischen Anpassung einer Schaltflächenvielzahl für einen betrachteten Funktionsumfang.

Die Anzahl der Funktionen, welche über eine Anwenderschnittstelle eines Fortbewegungsmittels bedient werden kann, steigt rasant an. Daher wird es immer wichtiger, den Nutzer nicht zu überfordern. Die Fähigkeit und Bereitschaft zur Erfassung und Verwendung auf einer Anzeige dargestellter Schaltflächen ist von Anwender zu Anwender sehr unterschiedlich ausgeprägt. Während ein erster Anwender eine möglichst große Vielzahl unterschiedlicher Sub-Funktionen in Form von Schaltflächen zeitgleich auf der Anzeigeeinheit angeboten bekommen möchte, findet sich ein zweiter Anwender deutlich besser zurecht, wenn weniger Sub-Funktionen zeitgleich angeboten werden und aktuell nicht angebotene Sub-Funktionen ggf. in einer weiteren Ebene in der Menüstruktur angeboten werden. Eine Möglichkeit zur Reduzierung einer aktuell angezeigten Schaltflächenvielzahl besteht darin, in ein Konfigurationsmenü oder einen Konfigurationsmodus zu wechseln, in welchem dann umfangreiche Anpassungen vorgenommen werden können.

DE 10 2009 046 010 A1 offenbart eine Fahrzeuginformationsanzeige zur Unterstützung eines Fahrers eines Fahrzeugs zur Verringerung eines Kraftstoffverbrauchs, bei welchem dem Fahrer Wahlmöglichkeiten bzgl. der Menge und der Art durch mehrere, wählbare Informationsanzeigenebenen anzuzeigenden Inhalts angeboten werden.

DE 697 12 501 T2 offenbart eine Zuweisung von Prioritäten an Fahrzeug-Anzeigemerkmale für Informationen auf, die auf einem re-konfigurierbaren Anzeigefeld anzuzeigen sind. Wenn der Information eine Priorität zugewiesen ist, wertet eine Steuerung den verfügbaren Anzeigebereich aus und bestimmt, welche Information anzuzeigen ist und welche Information nicht angezeigt wird.

https://www.youtube.com/watch?v=w0gByxIJeLU zeigt ein Betriebssystem, bei welchem die auf einem Smartphone dargestellten App-Icons durch eine Drücken- und Halten-Geste sämtlich in einen Konfigurationsmodus überführt werden, in welchem ein Icon aus dem dargestellten Bildschirm entfernt werden kann. Eine Corona umgibt das gedrückte und gehaltene Icon. Eine zweite Corona umgibt sämtliche auf dem Bildschirm dargestellte Icons, um den Konfigurationsmodus zu kennzeichnen.

"https://www.youtube.com/watch?v=bJN8IJfxXg8" zeigt ein zusätzliches Kombiinstrument für ein Fortbewegungsmittel, welches über eine OBDII-Schnittstelle angeschlossen und zur Darstellung von Betriebskenngrößen des Fortbewegungsmittels verwendet werden kann. Da die Betriebskenngrößen nicht geändert werden können, ist eine Primärfunktion, welche durch eine Interaktion mit den dargestellten Anzeigen assoziiert sein könnte, nicht vorgesehen. Vielmehr besteht die Primärfunktion in einer Wiedergabe von Informationen ohne jegliche Interaktion mit den Anzeigeinhalten. Durch eine Tippgeste können einzelne Anzeigen hinsichtlich ihrer Erscheinung geändert werden.

Ausgehend vom vorgenannten Stand der Technik ist es eine Aufgabe der vorliegenden Erfindung, zusätzliche Möglichkeiten zur Individualisierung von Anzeigeinhalten durch einen Anwender bereitzustellen. Insbesondere ist es eine Aufgabe der vorliegenden Erfindung, eine solche Individualisierung möglichst intuitiv vornehmen zu können.

### Offenbarung der Erfindung

Die vorstehend identifizierte Aufgabe wird erfindungsgemäß durch ein Verfahren zur Individualisierung eines Anzeigeinhaltes auf einem Bildschirm einer Anwenderschnittstelle für ein Fortbewegungsmittel sowie eine entsprechende Anwenderschnittstelle gelöst. Der Anzeigeinhalt kann auch als Bildschirminhalt oder als Bildschirmansicht aufgefasst werden. Unter einem Bildschirm sei im Rahmen der vorliegenden Erfindung insbesondere eine solche Anzeigeeinheit verstanden, auf welcher im Wesentlichen wahlfreie 2D-Inhalte graphisch angezeigt werden können (Matrix-Anzeige o.ä.). Die Anwenderschnittstelle dient der Ein- und Ausgabe von Informationen durch bzw. an einen Anwender. Als Fortbewegungsmittel kommen insbesondere PKW, Transporter, LKW, Wasser- und/oder Luftfahrzeuge in Betracht. Das Verfahren umfasst ein Darstellen eines ersten Anzeigeinhaltes in einem Bedienmodus auf dem Bildschirm. Der Bedienmodus umfasst eine Vielzahl von Schaltflächen, welche auf dem Bildschirm dargestellt werden. Im Bedienmodus können die mit den Schaltflächen assoziierten Primärfunktionen durch Interaktionen mit den Schaltflächen gestartet werden. Mit anderen Worten ist der Bedienmodus von einem ggf. vorhandenen "Konfigurationsmodus" zu unterscheiden, in welchem ein Anwender mit den Schaltflächen interagieren kann, um diese bspw. anders zu arrangieren, zu sortieren, Schaltflächen hinzuzufügen oder zu entfernen o.ä. In einem zweiten Schritt wird eine vordefinierte erste Anwendereingabe bzgl. einer ersten Schaltfläche empfangen. Die Anwendereingabe kann bspw. eine berührende Geste auf einem mit der Schaltfläche korrespondierenden Oberflächenbereich einer berührungsempfindlichen Oberfläche sein. Alternativ oder zusätzlich kann die Anwendereingabe eine frei im Raum ausgeführte (3D-) Geste umfassen, bei welcher bspw. eine Tipp-Geste in einem der ersten Schaltfläche zugeordneten Raumbereich der Anwenderschnittstelle ausgeführt und erkannt wird. Im Ansprechen darauf wird die erste Schaltfläche aus dem ersten Anzeigeinhalt entfernt, um eine individualisierte Konfiguration des ersten Anzeigeinhaltes zu erzeugen, während die übrigen Schaltflächen der Vielzahl der Schaltflächen fortwährend in einem Bedienmodus dargestellt werden und für eine Bedienung ihrer jeweiligen Primärfunktionen bereitstehen. Die erste Anwendereingabe kann eine einzelne Geste oder eine Reihe von Gesten umfassen, wobei während sämtlicher Zeitpunkte während der ersten Anwendereingabe die übrigen Schaltflächen im Bedienmodus dargestellt werden. Auf diese Weise kann der Anwender intuitiv eine erste Schaltfläche aus der aktuell angezeigten Vielzahl von Schaltflächen entfernen, ohne sich eines im Stand der Technik bekannten Konfigurationsmodus' bedienen zu müssen. Insgesamt werden insbesondere kleinere Anpassungen des Anzeigeinhaltes innerhalb kürzerer Zeit und mit einem Mindermaß an erforderlicher Aufmerksamkeit möglich, was die Bedienung während der Teilnahme am Straßenverkehr sicherer gestaltet.

Die Unteransprüche zeigen bevorzugte Weiterbildungen der Erfindung.

Ein Beispiel für eine erste Anwendereingabe ist eine Wisch-Geste in Richtung eines Randes des Anzeigeinhaltes. Bspw. kann die erste Schaltfläche in Richtung eines oberen Randes oder in Richtung eines unteren Randes gezogen werden, sofern die Wisch-Geste in diesem Zusammenhang nicht als Wechsel in eine anderer Bildschirmansicht (z.B. repräsentierend einen anderen Funktionsumfang) interpretiert werden kann. Bevorzugt kann zur Unterscheidung der erfindungsgemäß vorgeschlagenen Wisch-Geste von Wisch-Gesten zum Wechsel in eine andere Bildschirmansicht vorgesehen werden, dass bzgl. der ersten Schaltfläche zunächst eine Longpress-Geste auf die erste Schaltfläche erfasst wird, im Ansprechen worauf die erste Schaltfläche bildlich gesprochen am Finger des Anwenders "klebt" und sich die anschließende Wisch-Geste lediglich auf die Position der ersten Schaltfläche auswirkt. Alternativ oder zusätzlich kann vorgesehen sein, dass die Wisch-Geste nicht in Richtung eines Randes des Anzeigeinhaltes gerichtet ist, sondern auf einem vordefinierten Symbol (z.B. ein Papierkorb-Symbol) endet. Selbstverständlich kann dieses Symbol ebenfalls im Bereich eines Randes des Anzeigeinhaltes angeordnet sein, welcher insbesondere nicht selbst durch eine Wisch-Geste verschoben wird. Die Anzeige des vordefinierten Symbols kann bspw. im Ansprechen auf eine erkannte Longpress-Geste auf die erste Schaltfläche erfolgen. Die Verwendung des vordefinierten Symbols erübrigt eine Verschiebung der ersten Schaltfläche in einen Bereich abseits eines aktuellen Anzeigeinhaltes und ist für viele Anwender besonders selbst erklärend. Alternativ oder zusätzlich kann eine Longpress-Geste als erste Anwendereingabe vorgesehen sein, im Ansprechen auf welche eine "Löschen"-Schaltfläche dargestellt wird (z.B. veranschaulicht durch ein "x"-Symbol). Betätigt der Anwender nun im Rahmen der ersten Anwendereingabe die Löschen-Schaltfläche, wird die erste Schaltfläche aus dem ersten Anzeigeinhalt entfernt. Diese Form der Interaktion erübrigt eine Wisch-Geste, welche bei Fahrt auf unwegsamem Gelände zwar einfach auszuführen ist, jedoch insbesondere bei der Verwendung in Verbindung mit großen Bildschirmen ein höheres Maß an Bewegungsfreiheit für den Anwender erforderlich macht.

Bevorzugt kann die individualisierte Konfiguration anschließend (automatisch) abgespeichert werden und einem aktuellen Anwenderprofil aus einer Mehrzahl von Anwenderprofilen zugeordnet werden. Auf diese Weise wird die individualisierte Konfiguration nicht für sämtliche potentielle Anwender des Fortbewegungsmittels aktiviert, sodass die entfernte Schaltfläche bei Verwendung weiterer Anwenderprofile zunächst erneut angeboten wird und ggf. durch den dann zuständigen Anwender erneut erfindungsgemäß gelöscht werden kann.

Nach dem Wechsel eines aktuellen Anwenders (z.B. Fahrers) kann ein dem nun aktuellen Fahrer zugeordnetes Anwenderprofil aus einem aktuell verwendeten Funkschlüssel für das Fortbewegungsmittel ausgelesen werden. Selbstverständlich sind andere Möglichkeiten der Identifikation eines aktuellen Fahrers möglich, wie sie im Stand der Technik beschrieben werden. Im Ansprechen auf das ausgelesene Anwenderprofil wird der erste Anzeigeinhalt entsprechend einer dem weiteren Anwenderprofil zugeordneten individualisierten Konfiguration angepasst. Dabei kann die konkrete Konfiguration entweder im Fahrzeug gespeichert und durch den Funkschlüssel oder ein anderes Erkennungsmerkmal lediglich aufgerufen werden. Alternativ oder zusätzlich können die Konfiguration beschreibende Daten vom Funkschlüssel oder einem anderen Datenspeicher in das Fortbewegungsmittel geladen und zur Anpassung des Anzeigeinhaltes verwendet werden.

Sofern sich sie Vorlieben des Anwenders zur individualisierten Konfiguration bzw. zum Anzeigeinhalt geändert haben, kann ein Befehl zur Darstellung einer vergrößerten Vielzahl von Schaltflächen auf dem Anzeigeinhalt empfangen werden. Eine solche Geste kann bspw. eine Pinch ("Finger zueinander")-Geste oder eine Spread ("Finger auseinander)-Geste sein. Selbstverständlich sind andere Möglichkeiten des Aufrufs der vergrößerten Vielzahl von Schaltflächen möglich. Im Ansprechen auf den Befehl wird die zuvor entfernte erste Schaltfläche erneut dem Anzeigeinhalt hinzugefügt. Dies schließt nicht aus, dass weitere zuvor entfernte oder im aktuellen Anzeigeinhalt nicht vorgesehene Schaltflächen ebenfalls hinzugefügt werden. Mit anderen Worten kann der Befehl zur Darstellung einer vergrößerten Vielzahl von Schaltflächen derselbe sein, welcher auch zum Wechsel von einem Anzeigeinhalt mit einer ab Werk definierten reduzierten Schaltflächenanzahl zu einer ab Werk definierten vergrößerten Schaltflächenvielzahl führt. Ausgehend von der nun vergrößerten Vielzahl von Schaltflächen, welche bspw. eine maximale Schaltflächenvielzahl sein kann, kann der Anwender nun erneut diejenigen ersten Schaltflächen durch das erfindungsgemäße Verfahren entfernen, welche er nicht im aktuellen Anzeigeinhalt wünscht.

Ein möglicher Befehl zur Veränderung der Vielzahl angezeigter Schaltflächen besteht darin, mit zwei oder mehr Fingern im Wesentlichen parallel eine Wisch-Geste über eine vordefinierte Distanz auf der berührungsempfindlichen Oberfläche eines Touchscreens oder im Bereich einer 3D-Gestenerfassungseinheit auszuführen. Eine solche 2-Finger-Wischgeste kann sich auf diese Weise grundlegend von einer 1-Finger-Wischgeste hinsichtlich der gestarteten Funktion unterscheiden, obwohl die Komplexität der Geste für den Anwender kaum höher ist.

Gemäß einem zweiten Aspekt der vorliegenden Erfindung wird eine Anwenderschnittstelle für ein Fortbewegungsmittel vorgeschlagen. Die Anwenderschnittstelle umfasst einen Bildschirm zum Anzeigen eines Anzeigeinhaltes und eine Erfassungseinheit zum Erfassen einer Geste eines Anwenders. Die Erfassungseinheit kann als berührungsempfindliche Oberfläche und/oder als 3D-Gestenerfassungseinheit ausgestaltet sein. Zusätzliche Möglichkeiten zur Erfassung von Anwendereingaben können für die Erfassungseinheit vorgesehen sein. Eine Auswerteeinheit dient dem Erkennen der erfassten Geste, wobei der Bildschirm eingerichtet ist, einen ersten Anzeigeinhalt umfassend eine Vielzahl Schaltflächen in einem Bedienmodus auf dem Bildschirm darzustellen. Die Auswerteeinheit ist eingerichtet, mittels der Erfassungseinheit eine vordefinierte erste Anwendereingabe bzgl. einer ersten Schaltfläche der Vielzahl von Schaltflächen zu erkennen und im Ansprechen darauf die erste Schaltfläche aus dem ersten Anzeigeinhalt zur Erzeugung einer individualisierten Konfiguration des ersten Anzeigeinhaltes zu entfernen, während die übrigen Schaltflächen der Vielzahl fortwährend in einem Bedienmodus dargestellt werden. Mit anderen Worten ist die erfindungsgemäße Anwenderschnittstelle eingerichtet, ein Verfahren gemäß dem erstgenannten Erfindungsaspekt auszuführen bzw. zu ermöglichen. Die Anwenderschnittstelle kann bspw. eingerichtet sein, Bestandteil eines mobilen tragbaren Anwenderendgerätes (Smartphone, Tablet, PDA o.ä.) zu werden. Insbesondere ist die erfindungsgemäße Anwenderschnittstelle jedoch eingerichtet, fest in ein Fortbewegungsmittel integriert zu werden und dauerhaft mit der informationstechnischen Infrastruktur des Fortbewegungsmittels verbunden zu werden. Auf diese Weise ist die erfindungsgemäße Anwenderschnittstelle eingerichtet, die Merkmale, Merkmalskombinationen und die sich aus diesen ergebenden Vorteile des erfindungsgemäßen Verfahrens entsprechend zu verwirklichen.

Bevorzugt kann die erfindungsgemäße Anwenderschnittstelle auch eine Annäherungssensorik umfassen, durch welche die Auswerteeinheit eingerichtet ist, eine Annäherung eines Anwenders an den Bildschirm zu erkennen und im Ansprechen auf die Annäherung (z.B. einer Hand eines Anwenders) eine Schaltfläche zur Erzeugung eines Befehls zur Darstellung einer vergrößerten Vielzahl von Schaltflächen auf dem Anzeigeinhalt anzuzeigen. Durch die Annäherungssensorik und die Möglichkeit, die Annäherung des Anwenders zu erkennen, kann die erste Anwendereingabe bzgl. der ersten Schaltfläche deutlich vereinfacht werden. Dies gilt insbesondere für den Fall, dass die Annäherung bzgl. der ersten Schaltfläche von Annäherungen an übrige Schaltflächen informationstechnisch unterschieden werden kann. Dies ermöglicht eine Darstellung zahlreicher Funktionsflächen zur Anpassung der ersten Schaltfläche. Die erste Anwendereingabe kann bspw. als Betätigung einer dieser Funktionsflächen verstanden werden.

Gemäß einem dritten Aspekt der vorliegenden Erfindung wird ein Fortbewegungsmittel vorgeschlagen, welches bspw. als PKW, als Transporter, als LKW, als Motorrad, als Luft- und/oder Wasserfahrzeug ausgestaltet sein kann. Das Fortbewegungsmittel umfasst eine (insbesondere fest installierte) Anwenderschnittstelle, wie sie in Verbindung mit dem zweitgenannten Erfindungsaspekt im Detail beschrieben worden ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels eines erfindungsgemäß ausgestalteten Fortbewegungsmittels mit einem Ausführungsbeispiel einer erfindungsgemäß ausgestalteten Anwenderschnittstelle;
- Figur 2: eine schematische Bildschirmansicht ("Screenshot") eines Anzeigeinhaltes eines Ausführungsbeispiels einer erfindungsgemäßen Anwenderschnittstelle;
- Figur 3: eine Veranschaulichung einer Anwenderinteraktion mit einer in Fig. 2 dargestellten Bildschirmansicht zur Vergrößerung der Anzahl angezeigter Schaltflächen;
- Figur 4: ein Screenshot eines Ausführungsbeispiels einer erfindungsgemäßen Anwenderschnittstelle mit einer reduzierten Anzahl angezeigter Schaltflächen;
- Figur 5: eine Veranschaulichung einer Anwenderinteraktion mit einem in Fig. 4 dargestellten Screenshot;
- Figur 6: eine Veranschaulichung einer Anwenderinteraktion mit einem Screenshot einer erfindungsgemäßen Anwenderschnittstelle mit einer vergrößerten Vielzahl Schaltflächen;
- Figur 7: eine Veranschaulichung einer ersten Anwendereingabe bzgl. einer ersten Schaltfläche des in Fig. 6 dargestellten Screenshots zur erfindungsgemäßen Reduzierung der Schaltflächenanzahl;
- Figur 8: eine Veranschaulichung einer Anwenderinteraktion zur Erhöhung einer Vielzahl von Schaltflächen in;
- Figur 9: das Resultat der in Fig. 8 dargestellten Anwenderinteraktion;
- Figur 10: einen Screenshot eines Ausführungsbeispiels einer erfindungsgemäßen Anwenderschnittstelle mit reduzierter Schaltflächenvielzahl;
- Figur 11: eine Veranschaulichung einer Anwenderinteraktion in Form einer Spread-Geste zur Erhöhung der in Fig. 10 dargestellten Schaltflächenvielzahl;
- Figur 12: einen Screenshot eines Ausführungsbeispiels einer erfindungsgemäßen Anwenderschnittstelle mit reduzierter Schaltflächenvielzahl;
- Figur 13: eine Veranschaulichung einer Anwenderinteraktion in Form einer 2-Finger-Wischgeste zur Erhöhung der in Fig. 12 dargestellten Schaltflächenvielzahl; und
- Figur 14: ein Flussdiagramm veranschaulichend Schritte eines Ausführungsbeispiels eines erfindungsgemäßen Verfahrens zur Individualisierung eines Anzeigeinhaltes auf einem Bildschirm einer Anwenderschnittstelle.

### Ausführungsformen der Erfindung

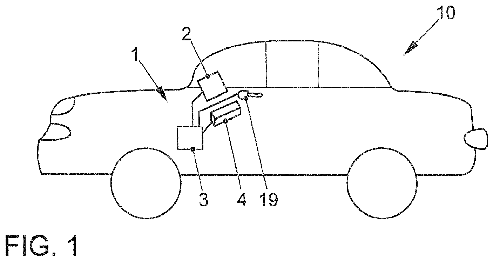

Figur 1 zeigt einen PKW 10 als Fortbewegungsmittel, in welchem ein Bildschirm 2 einer Anwenderschnittstelle 1 mit einem elektronischen Steuergerät 3 als Auswerteeinheit informationstechnisch verbunden ist. Das elektronische Steuergerät 3 verfügt weiter über eine Informationsleitung zu einer Zugangsberechtigungsprüfvorrichtung in Form eines Zündschlossmoduls, in welche ein Zündschlüssel 19 eingesteckt ist. Aus dem Zündschlüssel 19 kann das elektronische Steuergerät 3 ein aktuelles Fahrerprofil ermitteln, und ggf. zu einem früheren Zeitpunkt definierte individualisierte Konfigurationen eines ersten Anzeigeinhaltes laden bzw. aktuelle individualisierte Konfigurationen in den Zündschlüssel 19 speichern. Zusätzlich verfügt die Anwenderschnittstelle 1 über eine 3D-Gestenerfassungseinheit in Form einer Infrarot-LED-Leiste 4.

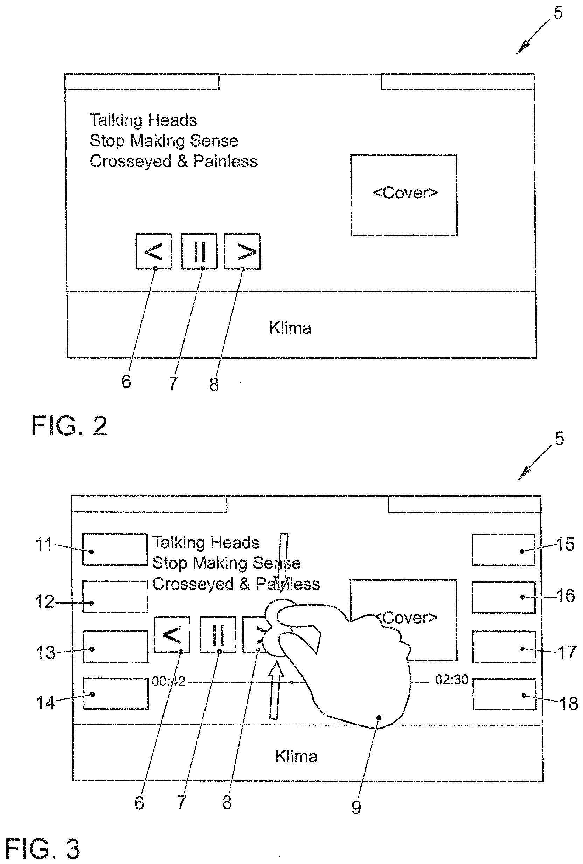

Figur 2 zeigt einen Screenshot eines ersten Anzeigeinhaltes 5 einer erfindungsgemäßen Anwenderschnittstelle, in welchem Schaltflächen 6, 8 zum Springen zu einem vorangegangenen bzw. nachfolgenden Musiktitel und eine Schaltfläche 7 zur Unterbrechung der Wiedergabe eines aktuell wiedergegebenen Musiktitels angezeigt werden. Zudem wird ein Platzhalter "Cover" für ein dem aktuell wiedergegebenen Album zugeordnetes Bild dargestellt.

Figur 3 zeigt das Resultat einer auf einer berührungsempfindlichen Oberfläche des Bildschirms ausgeführten Pinch ("Finger zueinander")-Geste einer Hand 9 eines Anwenders zur Erhöhung des angezeigten Vielzahl von Schaltflächen 6, 7, 8 auf dem Anzeigeinhalt 5. Zusätzlich werden nun Schaltflächen 11 bis 18 angezeigt, über welche zusätzliche Funktionen für die Funktionsfamilie "Medienwiedergabe" bedient werden können.

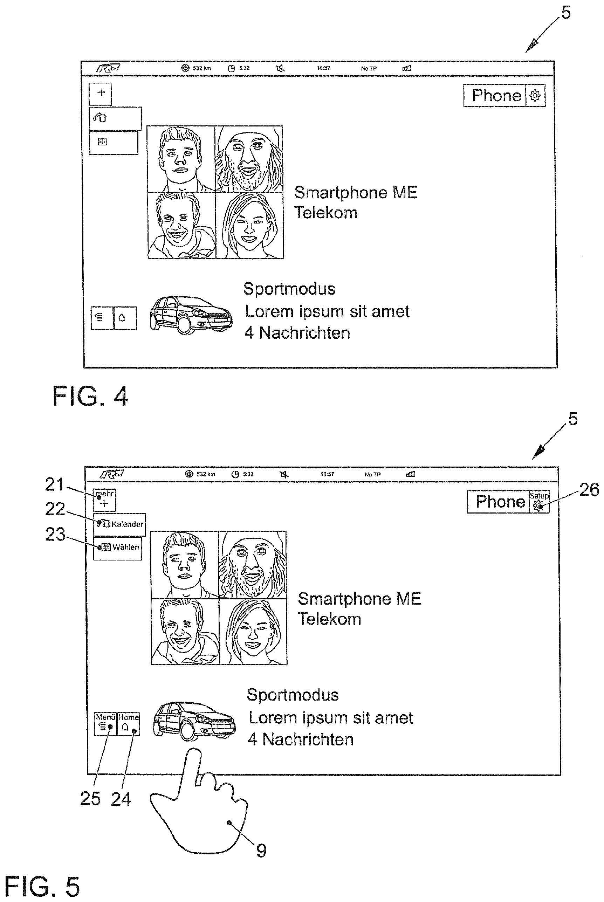

Figur 4 zeigt ein konkretes Beispiel für eine Bildschirmansicht einer erfindungsgemäßen Anwenderschnittstelle in einem Anzeige-Modus vor einem Erkennen einer Annäherung eines Anwenders an eine Erfassungseinheit der Anwenderschnittstelle, durch welche die Anwenderschnittstelle in einen Bedienmodus wechselt. Die Ansicht ist einer Telefonie-Funktion zugeordnet und gibt zusätzliche Informationen über eine aktuelle Fahrwerkskonfiguration "Sport-Modus" und eine Anzahl bislang ungelesener Nachrichten wieder.

Im Ansprechen auf eine Annäherung eines Anwenders mit einer Hand 9 an eine der Anwenderschnittstelle zugeordnete 3D-Gesten-Erfassungseinheit wird eine zusätzliche Schaltfläche 21 zur Vergrößerung einer Anzahl dargestellter Schaltflächen, eine Schaltfläche 22 zur Durchführung eines Rufaufbaus, eine Schaltfläche 23 zum Einblenden eines Ziffernblocks, eine Schaltfläche 24 zur Rückkehr zu einer Home-Bildschirmansicht, eine Schaltfläche 25 zum Einblenden einer Menüstruktur und eine Schaltfläche 26 zum Aufrufen eines Konfigurationsmenüs für die Telefoniefunktion dargestellt.

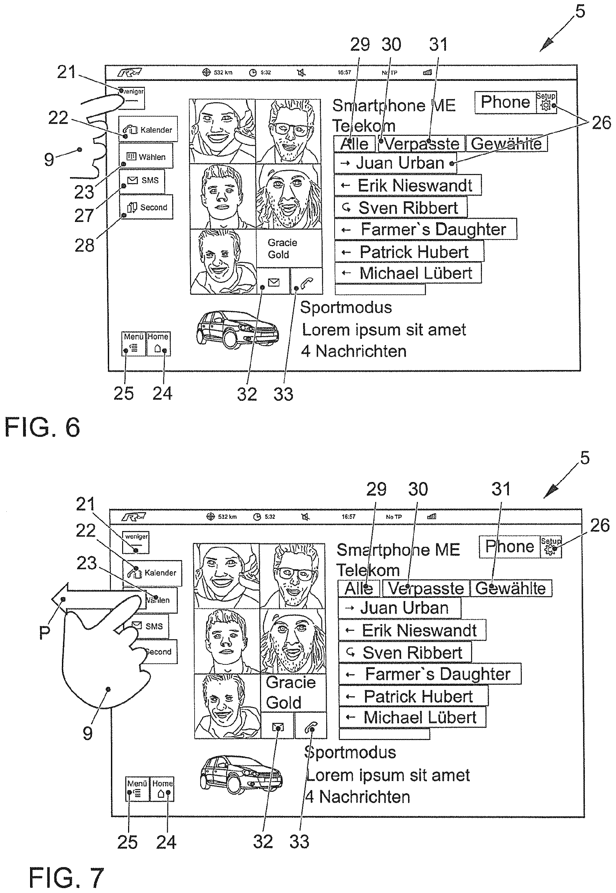

Figur 6 zeigt die Interaktion eines Anwenders mit der Schaltfläche 21 zur Vergrößerung der Vielzahl dargestellter Schaltflächen, welche nach erfolgter Interaktion zur Verringerung der Vielzahl angezeigter Schaltflächen zur Verfügung steht. Zusätzlich werden nun eine Schaltfläche 27 zur Anzeige empfangener Kurznachrichten, eine Schaltfläche 28 zur Synchronisation eines externen Mobiltelefons, Schaltflächen 29, 30 und 31 zur Filterung solcher Kontakte angezeigt, mit welchen in letzter Zeit Telefonverbindungen bestanden. Außerdem werden zwei weitere Kontakt-Felder angezeigt, von welchen eines zwar kein Foto, dafür jedoch Schaltflächen 32, 33 zum Senden einer Nachricht bzw. Durchführen eines Rufaufbaus mit der betreffenden Person aufweist.

Figur 7 zeigt eine erfindungsgemäße erste Anwendereingabe (Wischgeste Pfeil "P") bzgl. einer zum Einblenden eines Ziffernblocks verwendbaren ersten Schaltfläche 23. Hierbei führt der Anwender die erste Schaltfläche 23 aus der aktuellen Bildschirmansicht des Anzeigeinhaltes 5 in horizontaler Richtung hinaus, im Ansprechen worauf die Schaltfläche 23 aus einer Konfiguration des Anzeigeinhaltes solange entfernt, bis entweder ein Befehl zur Vergrößerung der Anzahl dargestellter Schaltflächen (siehe Fig. 3) oder ein Signal zur Aktivierung eines solchen Anwenderprofils empfangen wird, welchem die Schaltfläche 23 weiterhin zugeordnet ist.

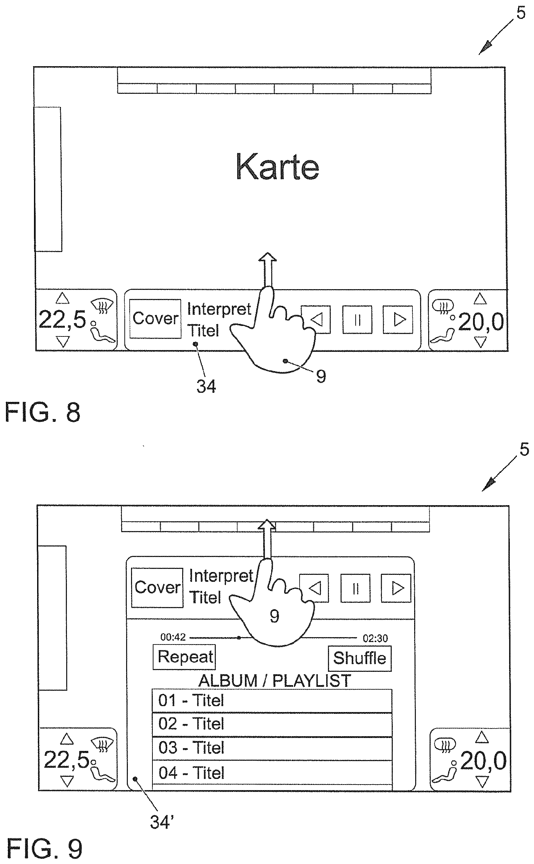

Figur 8 zeigt eine Anwendereingabe auf einem alternativ ausgeführten Anzeigeinhalt, bei welcher durch eine vertikale Wischbewegung einer Hand 9 eines Anwenders mit einem Startpunkt auf einem am unteren Rand des Anzeigeinhaltes angeordneten Bedienfeldes 34 die Anzahl der dargestellten Schaltflächen wie in Fig. 9 gezeigt vergrößert wird.

Figur 9 zeigt das Resultat der in Figur 8 gestarteten Anwendereingabe, durch welche die Schaltflächenvielzahl innerhalb des vom Anwender bedienten Feldes 34' stark vergrößert wurde. Durch erfindungsgemäße erste Anwendereingaben kann der Anwender anschließend einzelne der enthaltenen Schaltflächen aus dem Feld 34' entfernen.

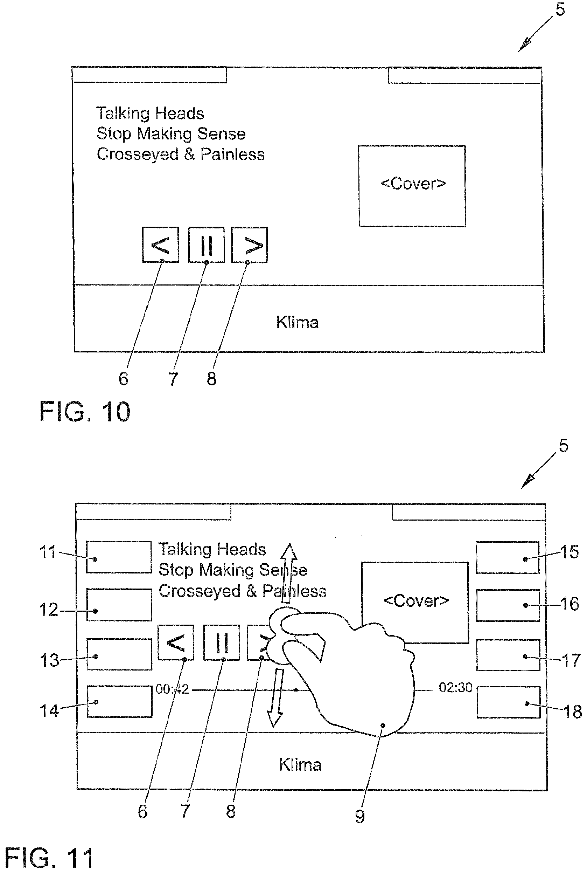

Figur 10 zeigt den in Figur 2 dargestellten Anzeigeinhalt.

Figur 11 zeigt eine Finger-auseinander- (Spread-) Geste einer Hand 9 eines Anwenders, im Ansprechen auf welche die Vielzahl in Figur 10 dargestellter Schaltflächen 6, 7, 8 um zusätzliche Schaltflächen 11 bis 18 erweitert wird.

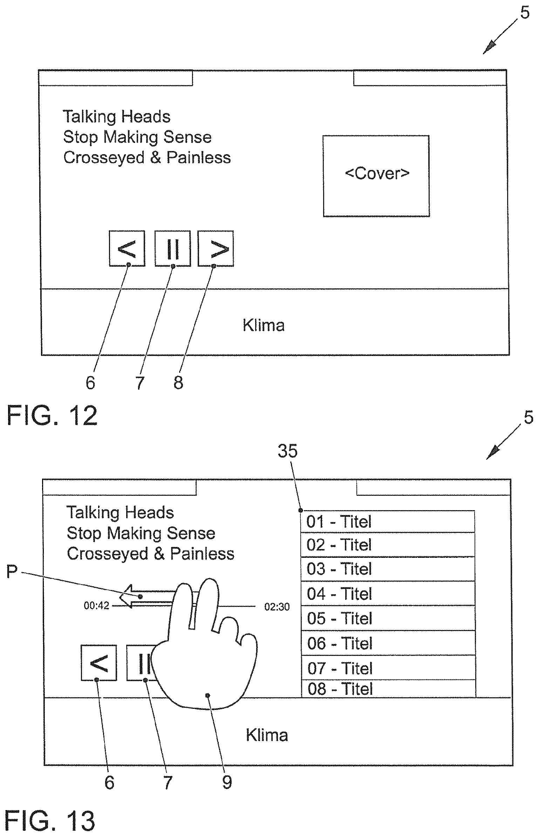

Figur 12 zeigt wieder die in Verbindung mit den Figuren 2 und 10 dargestellte Ansicht, ausgehend von welcher in Verbindung mit Figur 13 nachfolgend eine 2-Finger-Wischgeste erläutert wird.

Figur 13 zeigt eine Anwenderinteraktion zur Vergrößerung der Vielzahl angezeigter Schaltflächen 6, 7, 8, in welcher die Hand eines Anwenders eine 2-Finger-Wischgeste entlang eines horizontal orientierten Pfeils P ausführt. Im Ansprechen darauf wird eine Wiedergabeliste als erste Schaltfläche 35 angezeigt, welche anschließend erfindungsgemäß aus dem Anzeigeinhalt entfernt werden kann.

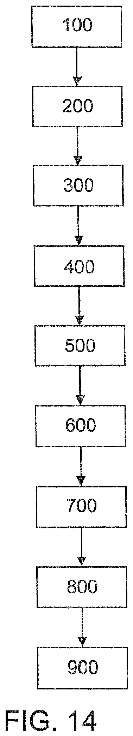

Figur 14 zeigt ein Flussdiagramm veranschaulichend Schritte eines Ausführungsbeispiels eines erfindungsgemäßen Verfahrens zu Individualisierung eines Anzeigeinhaltes auf einem Bildschirm einer Anwenderschnittstelle für ein Fortbewegungsmittel. In Schritt 100 wird ein erster Anzeigeinhalt in einem Bedienmodus auf dem Bildschirm umfassend eine Vielzahl Schaltflächen dargestellt. In Schritt 200 wird eine vordefinierte erste Anwendereingabe bzgl. einer ersten Schaltfläche der Vielzahl Schaltflächen empfangen. Im Ansprechen darauf wird die erste Schaltfläche in Schritt 300 aus dem ersten Anzeigeinhalt entfernt, um eine individualisierte Konfiguration des ersten Anzeigeinhaltes zu erzeugen. Währenddessen werden die übrigen Schaltflächen der Vielzahl Schaltflächen fortwährend in einem Bedienmodus dargestellt, sodass der Anwender vor, nach oder sogar während (eine Multi-Touch-Funktion vorausgesetzt) der ersten Anwendereingabe eine den übrigen Schaltflächen zugeordnete Primärfunktion aufrufen kann. In Schritt 400 wird die individualisierte Konfiguration abgespeichert und in Schritt 500 der Speichereintrag zu einem aktuellen Anwenderprofil aus einer Mehrzahl von Anwenderprofilen zugeordnet. Im Zuge einer Verwendung des Fortbewegungsmittels durch einen weiteren Anwender wird in Schritt 600 ein weiteres Anwenderprofil aus einem aktuell verwendeten Funkschlüssel für das Fortbewegungsmittel ausgelesen. Im Ansprechen darauf wird in Schritt 700 der erste Anzeigeinhalt entsprechend einer dem weiteren Anwenderprofil zugeordneten individualisierter Konfiguration angepasst. Die individualisierte Konfiguration kann bspw. eine gegenüber einer maximal möglichen Vielzahl von Schaltflächen verringerte Vielzahl von Schaltflächen aufweisen. Wird in Schritt 800 anschließend ein Befehl zur Darstellung einer vergrößerten Vielzahl von Schaltflächen auf dem Anzeigeinhalt empfangen, werden im Ansprechen darauf sämtliche zuvor entfernte erste Schaltflächen in Schritt 900 zu dem Anzeigeinhalt hinzugefügt. Nun werden wieder sämtliche vorgesehene Schaltflächen angezeigt, sodass der Anwender erfindungsgemäß eine erneute Entfernung von Schaltflächen zur Anpassung des Anzeigeinhaltes an seine aktuellen Vorlieben durchführen kann.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: elektronisches Steuergerät
- 4: Infrarot-LED-Leiste
- 5: Anzeigeinhalt
- 6,7,8: Schaltflächen
- 9: Hand des Anwenders
- 10: PKW
- 11-18: Schaltflächen
- 19: Zündschlüssel
- 21-35: Schaltflächen
- 100-900: Verfahrensschritte
- P: Pfeil

## Patentansprüche

1. Verfahren zur Individualisierung eines Anzeigeinhaltes (5) auf einem Bildschirm (2) einer Anwenderschnittstelle (1) für ein Fortbewegungsmittel (10), wobei die Anwenderschnittstelle (1)
- einen Bedienmodus aufweist, in welchem mit auf dem Bildschirm (2) dargestellten Schaltflächen (21-35) assoziierte Primärfunktionen durch Interaktionen mit den Schaltflächen (21-35) gestartet werden und in welchem ein Anwender mit Schaltflächen interagieren kann, um diese zu bearbeiten, insbesondere anders zu arrangieren, zu sortieren, Schaltflächen hinzuzufügen oder zu entfernen und wobei das Verfahren die Schritte umfasst:
- Darstellen (100) eines ersten Anzeigeeinhaltes (5) in dem Bedienmodus auf dem Bildschirm (2) umfassend eine Vielzahl im Bedienmodus befindlicher Schaltflächen (21-35), und **gekennzeichnet ist durch**
- Empfangen (200) einer vordefinierten ersten Anwendereingabe bezüglich einer ersten Schaltfläche (23) der Vielzahl im Bedienmodus befindlicher Schaltflächen (21-35), und im Ansprechen darauf
- Entfernen (300) der ersten Schaltfläche (23) aus dem ersten Anzeigeinhalt (5) zur Erzeugung einer individualisierten Konfiguration des ersten Anzeigeinhaltes (5), während die übrigen Schaltflächen (21, 22, 24-35) der Vielzahl Schaltflächen (21-35) fortwährend in einem Bedienmodus dargestellt werden.

2. Verfahren nach Anspruch 1, wobei die erste Anwendereingabe
- eine Wischgeste (P) in Richtung eines Randes des Anzeigeinhaltes (5), insbesondere nach einer zuvor ausgeführten Longpress-Geste auf die erste Schaltfläche (23), und/oder
- eine Wischgeste (P) auf ein vordefiniertes Symbol auf dem Anzeigeinhalt (5), und/oder
- eine Longpress-Geste und eine anschließende Betätigung einer im Ansprechen auf die Longpress-Geste dargestellten "Löschen"-Schaltfläche umfasst.

3. Verfahren nach Anspruch 1 oder 2, weiter umfassend
- Abspeichern (400) der individualisierten Konfiguration und
- Zuordnen (500) des Speichereintrags zu einem aktuellen Anwenderprofil aus einer Mehrzahl von Anwenderprofilen.

4. Verfahren nach einem der vorstehenden Ansprüche weiter umfassend
- Auslesen (600) eines weiteren Anwenderprofils aus einem aktuell verwendeten Funkschlüssel (19) für das Fortbewegungsmittel (10), und im Ansprechen darauf
- Anpassen (700) des ersten Anzeigeinhaltes (5) entsprechend einer dem weiteren Anwenderprofil (5) zugeordneten individualisierten Konfiguration.

5. Verfahren nach einem der vorstehenden Ansprüche weiter umfassend
- Empfangen (800) eines Befehls zur Darstellung einer vergrößerten Vielzahl von Schaltflächen (21-35) auf dem Anzeigeinhalt (5), und im Ansprechen darauf
- Hinzufügen (900) der zuvor entfernten ersten Schaltfläche (23) zu dem Anzeigeinhalt (5).

6. Verfahren nach einem der vorstehenden Ansprüche weiter umfassend
- Empfangen einer mittels mindestens zweier Finger eines Anwenders ausgeführten Wischgeste (P) bezüglich des Anzeigeinhaltes (5) und im Ansprechen darauf
- Vergrößern oder Verkleinern der Vielzahl von Schaltflächen (21-35) auf dem Anzeigeinhalt (5).

7. Anwenderschnittstelle für ein Fortbewegungsmittel (10) umfassend
- einen Bildschirm (2)
- eine Erfassungseinheit (4) zum Erfassen einer Geste (P) eines Anwenders, und
- eine Auswerteeinheit (3) zum Erkennen der erfassten Gesten (P), wobei die Anwenderschnittstelle (1)
- einen Bedienmodus aufweist, in welchem mit auf dem Bildschirm (2) dargestellten Schaltflächen (21-35) assoziierte Primärfunktionen durch Interaktionen mit den Schaltflächen (21-35) gestartet werden und in welchem ein Anwender mit Schaltflächen interagieren kann, um diese zu bearbeiten, insbesondere anders zu arrangieren, zu sortieren, Schaltflächen hinzuzufügen oder zu entfernen, und wobei
- der Bildschirm (2) eingerichtet ist, einen ersten Anzeigeinhalt (5) umfassend eine Vielzahl im Bedienmodus befindlicher Schaltflächen (21-35) in einem Bedienmodus auf dem Bildschirm (2) darzustellen, **dadurch gekennzeichnet, dass**
- die Auswerteeinheit (3) eingerichtet ist,
- mittels der Erfassungseinheit (4) eine vordefinierte erste Anwendereingabe bezüglich einer ersten Schaltfläche (23) der Vielzahl im Bedienmodus befindlicher Schaltflächen (21-35) zu erkennen, und im Ansprechen darauf
- die erste Schaltfläche (23) aus dem ersten Anzeigeinhalt (5) zur Erzeugung einer individualisierten Konfiguration des ersten Anzeigeinhaltes (5) zu entfernen, während die übrigen Schaltflächen (21, 22, 24-35) der Vielzahl Schaltflächen (21-35) fortwährend in einem Bedienmodus dargestellt werden.

8. Anwenderschnittstelle nach Anspruch 7, weiter umfassend
- eine Annäherungssensorik (4), durch welche die Auswerteeinheit (3) eingerichtet ist, eine Annäherung eines Anwenders an den Bildschirm (2) zu erkennen und im Ansprechen auf die Annäherung
- eine Schaltfläche (21) zur Erzeugung eines Befehls zur Darstellung einer vergrößerten Vielzahl von Schaltflächen (21-35) auf dem Anzeigeinhalt (5) anzuzeigen.

9. Anwenderschnittstelle nach Anspruch 7 oder 8, welche weiter eingerichtet ist, ein Verfahren nach einem der vorstehenden Ansprüche 1 bis 6 auszuführen.

10. Fortbewegungsmittel umfassend eine Anwenderschnittstelle (1) nach einem der vorstehenden Ansprüche 7 bis 9.

## Claims

1. Method for individualizing display content (5) on a screen (2) of a user interface (1) for a means of transportation (10), wherein the user interface (1) comprises:
- an operating mode in which primary functions associated with buttons (21-35) shown on the screen (2) are started by interactions with the buttons (21-35), and
- in which a user can interact with buttons to edit, in particular, rearrange, sort, add or remove buttons, wherein the method comprises the steps of:
- presentation (100) of first display content (5) on the screen (2) in the operating mode comprising a plurality of buttons (21-35) in operating mode, and **characterized by**
- reception of (200) a predefined first user input via a first button (23) of the plurality of buttons (21-35) in operating mode, and in response thereto
- removal (300) of the first button (23) from the first display content (5) to produce an individualized configuration of the first display content (5), while the remaining buttons (21, 22, 24-35) of the plurality of buttons (21-35) are continuously displayed in an operating mode.

2. Method according to claim 1, wherein the first user input comprises.
- a swipe gesture (P) in the direction of an edge of the display content (5), in particular after a previously executed long press gesture on the first button (23), and/or
- a swipe gesture (P) on a predefined symbol on the display content (5), and/or
- a long press gesture and a subsequent actuation of a "cancel" button displayed in response to the long press gesture.

3. Method according to claim 1 or 2, further comprising
- saving (400) of the individualized configuration and
- associating (500) the memory entry with a current user profile from a plurality of user profiles.

4. Method according to any one of the preceding claims further comprising
- reading (600) out another user profile from a currently used radio key (19) for the means of transportation (10), and in response thereto
- matching (700) of the first display content (5) corresponding to an individualized configuration associated with the further user profile (5).

5. Method according to any one of the preceding claims further comprising
- reception (800) of a command for displaying an enlarged plurality of buttons (21-35) on the display content (5), and in response thereto
- adding (900) the previously removed first button (23) to the display content (5).

6. Method according to any one of the preceding claims further comprising
- reception of a swipe gesture (P) executed by at least two fingers of a user related to the display content (5) and, in response thereto,
- increasing or decreasing the number of buttons (21-35) on the display content (5).

7. User interface for a means of transportation (10) comprising
- a screen (2)
- a detection unit (4) for detecting a gesture (P) of a user, and
- an evaluation unit (3) for recognizing the detected gestures (P), wherein the user interface (1)
∘ has an operating mode in which buttons (21-35) shown on the screen (2) and associated with primary functions are started by interactions with the buttons (21-35) and
∘ in which a user can interact with buttons to edit them, in particular to rearrange, sort, add or remove buttons, and
∘ the screen (2) is arranged to display a first display content (5) comprising a plurality of operating-mode buttons (21-35) on the screen (2) in an operating mode, **characterized in that**
- the evaluation unit (3) is set up,
∘ to detect, by means of the detection unit (4), a predefined first user input with respect to a first button (23) of the plurality of operating mode buttons (21-35), and, in response thereto,
∘ to remove the first button (23) from the first display content (5) to produce an individualized configuration of the first display content (5), while the remaining buttons (21, 22, 24-35) of the plurality of buttons (21-35) are continuously displayed in an operating mode.

8. User interface according to claim 7, further comprising
- a proximity sensor (4), by means of which the evaluation unit (3) detects the approach of a user to the screen (2) and, in response to the approach,
- displays a button (21) for generating a command for displaying an enlarged plurality of buttons (21-35) on the display content (5).

9. User interface according to claim 7 or 8, which is further designed to carry out a method according to one of the preceding claims 1 to 6.

10. Means of transportation comprising a user interface (1) according to any one of the preceding claims 7 to 9.

## Revendications

1. Procédé d'individualisation d'un contenu d'affichage (5) sur un écran (2) d'une interface utilisateur (1) pour un moyen de transport (10), l'interface utilisateur (1)
- comprenant un mode de fonctionnement dans lequel des fonctions primaires associées à des boutons (21-35) représentés sur l'écran (2) sont démarrées par des interactions avec les boutons (21-35) et dans lequel un utilisateur peut interagir avec des boutons, afin de traiter ceux-ci, plus particulièrement de les disposer autrement, de les trier, d'ajouter ou de supprimer des boutons et le procédé comprenant les étapes suivantes :
- représentation (100) d'un premier contenu d'affichage (5) dans le mode de fonctionnement sur l'écran (2) comprenant une pluralité de boutons (21-35) se trouvant dans le mode de fonctionnement et est **caractérisé par**
- la réception (200) d'une première entrée d'utilisateur prédéfinie concernant un premier bouton (23) de la pluralité de boutons (21-35) se trouvant dans le mode de fonctionnement et, en réaction à cela,
- la suppression (300) du premier bouton (23) du premier contenu d'affichage (5) pour la production d'une configuration individualisée du premier contenu d'affichage (5), tandis que les autres boutons (21, 22, 24-35) de la pluralité de boutons (21-35) sont représentés en permanence dans un mode de fonctionnement.

2. Procédé selon la revendication 1, la première entrée d'utilisateur comprend
- un geste d'effleurement (P) en direction d'un bord du contenu d'affichage (5), plus particulièrement après un geste de pression prolongée effectué auparavant sur le premier bouton (23) et/ou
- un geste d'effleurement (P) sur un symbole prédéfini sur le contenu d'affichage (5) et/ou
- un geste de pression prolongée et un actionnement suivant d'un bouton « Effacer » représenté en réponse au geste de pression prolongée.

3. Procédé selon la revendication 1 ou 2, comprenant en outre
- l'enregistrement (400) de la configuration individualisée et
- l'attribution (500) de l'entrée de mémoire à un profil d'utilisateur actuel parmi une pluralité de profils d'utilisateurs.

4. Procédé selon l'une des revendications précédentes, comprenant en outre
- la lecture (600) d'un autre profil d'utilisateur à partir d'une radiocommande (19) actuellement utilisée pour le moyen de transport (10) et, en réaction à cela,
- l'adaptation (700) du premier contenu d'affichage (5) à une configuration individualisée assignée à l'autre profil d'utilisateur (5).

5. Procédé selon l'une des revendications précédentes, comprenant en outre
- la réception (800) d'une instruction pour la représentation d'une pluralité augmentée de boutons (21-35) sur le contenu d'affichage (5) et, en réaction à cela,
- l'ajout (900) du premier bouton (23), auparavant supprimé, au contenu d'affichage (5).

6. Procédé selon l'une des revendications précédentes, comprenant en outre
- la réception d'un geste d'effleurement (P) exécuté au moyen d'au moins deux doigts d'un utilisateur, concernant le contenu d'affichage (5) et, en réaction à cela,
- augmentation ou diminution de la pluralité de boutons (21-35) sur le contenu d'affichage (5).

7. Interface utilisateur pour un moyen de transport (10), comprenant
- un écran (2)
- une unité de détection (4) pour la détection d'un geste (P) d'un utilisateur et
- une unité d'analyse (3) pour la reconnaissance du geste (P) détecté, l'interface utilisateur (1)
- comprenant un mode de fonctionnement dans lequel des fonctions primaires associées à des boutons (21-35) représentés sur l'écran (2) sont démarrées par des interactions avec les boutons (21-35) et dans lequel un utilisateur peut interagir avec des boutons, afin de traiter ceux-ci, plus particulièrement de les disposer autrement, de les trier, d'ajouter ou de supprimer des boutons et
- l'écran (2) étant conçu pour représenter un premier contenu d'affichage (5) comprenant une pluralité de boutons (21-35) se trouvant dans le mode de fonctionnement dans un mode de fonctionnement sur l'écran (2), **caractérisé en ce que**
- l'unité d'analyse (3) est conçue
- pour reconnaître, au moyen de l'unité de détection (4), une première entrée d'utilisateur prédéfinie concernant un premier bouton (23) de la pluralité de boutons (21-35) se trouvant dans le mode de fonctionnement et, en réaction à cela,
- pour supprimer le premier bouton (23) du premier contenu d'affichage (5) pour la production d'une configuration individualisée du premier contenu d'affichage (5), tandis que les autres boutons (21, 22, 24-35) de la pluralité de boutons (21-35) sont représentés en permanence dans un mode de fonctionnement.

8. Interface utilisateur selon la revendication 7, comprenant en outre
- un capteur de proximité (4), par l'intermédiaire duquel l'unité d'analyse (3) est conçue pour détecter l'approche d'un utilisateur de l'écran (2) et, en réaction à cette approche,
- pour afficher un bouton (21) pour la production d'une instruction pour la représentation d'une pluralité augmentée de boutons (21-35) sur le contenu d'affichage (5).

9. Interface utilisateur selon la revendication 7 ou 8, qui est en outre conçue pour exécuter un procédé selon l'une des revendications précédentes 1 à 6.

10. Moyen de transport comprenant une interface utilisateur (1) selon l'une des revendications précédentes 7 à 9.
